# EUROPÄISCHE PATENTSCHRIFT

(11) **EP 1 133 112 B1**
(45) Veröffentlichungstag und Bekanntmachung des Hinweises auf die Patenterteilung: **09.02.2005**
(21) Anmeldenummer: 01105051.5
(22) Anmeldetag: 01.03.2001
(51) Int. Cl.: H04L 12/56, H04Q 11/04

(54) **Verfahren zum Verteilen einer Datenverkehrslast eines Kommunikationsnetzes und Kommunikationsnetz zur Realisierung des Verfahrens**
Method for balancing the data transfer load of a communication network and corresponding communication network
Procédé pour distribuer la charge du transfert des données d'un réseau de communication et réseau de communication

(30) Priorität: 10.03.2000 DE 10011722
(43) Veröffentlichungstag der Anmeldung: 12.09.2001
(73) Patentinhaber: SIEMENS AKTIENGESELLSCHAFT, 80333 München (DE)
(72) Erfinder: Hummel, Heinrich, 85232 Günding (DE)

(56) Entgegenhaltungen:
- US-A- 5 042 027
- US-A- 5 467 345
- VILLAMIZAR CURTIS: "OSPF Optimized Multipath" IETF, INTERNET DRAFT, 24. Februar 1999 (1999-02-24), XP002195148 Gefunden im Internet: <URL:http://www.watersprings.org/pub/id/dr aft-ietf-ospf-omp-02.txt> [gefunden am 2002-04-04]
- APOSTOLOPOULOS G ET AL: "Implementation and performance measurements of QoS routing extensions to OSPF" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, 21. März 1999 (1999-03-21), Seiten 680-688, XP010323784 ISBN: 0-7803-5417-6
- WOLLMAN W V ET AL: "Overview of open shortest path first, version 2 (OSPF V2) routing in the tactical environment" MILITARY COMMUNICATIONS CONFERENCE, 1995. MILCOM '95, CONFERENCE RECORD, IEEE SAN DIEGO, CA, USA 5-8 NOV. 1995, NEW YORK, NY, USA,IEEE, US, 5. November 1995 (1995-11-05), Seiten 925-930, XP010154076 ISBN: 0-7803-2489-7

## Beschreibung

In zeitgemäßen, aus einer Vielzahl von über Linkleitungen vernetzten Netzknoten bestehenden Kommunikationsnetzen werden Daten häufig innerhalb von Datenpaketen übermittelt. Die Datenpakete werden dabei von einem Ursprungsnetzknoten ausgehend von Netzknoten zu Netzknoten bis zu einem Zielnetzknoten übertragen. Bekannte Übermittlungsverfahren dieser Art sind beispielsweise das sog. ATM-Verfahren (asynchronous transfer mode), das sog. MPLS-Verfahren (multiprotocol label switching) und auf dem Internet-Protokoll (IP) basierende ren.

Zur Übermittlung von Datenpaketen von einem Ursprungsnetzknoten zu einem Zielnetzknoten stehen in der Regel mehrere alternative Leitwege zur Verfügung. Aus diesen ist für jedes zu übertragende Datenpaket oder für jeden Datenpaketstrom zusammengehöriger Datenpakete jeweils ein geeigneter Leitweg auszuwählen. Die Auswahl richtet sich dabei insbesondere nach dem Kriterium, die Datenpakete mit möglichst geringer Verzögerung und mit möglichst wenigen Paketverlusten zum Zielnetzknoten zu übermitteln. Zur Optimierung der Datenübertragungsleistung des gesamten Kommunikationsnetzes sollte die Auswahl darüber hinaus in einer Weise erfolgen, daß Übertragungsengpässe, d.h. eine Überlastung einzelner Netzknoten bzw. Linkleitungen nach Möglichkeit vermieden werden. Dies kann durch eine geeignete Verteilung der Datenverkehrslast im Kommunikationsnetz erreicht werden. Dabei ergibt sich allerdings das Problem, die Leitwegauswahl der einzelnen Netzknoten im Sinne einer netzknotenübergreifenden Verteilung der Datenverkehrslast aufeinander abzustimmen.

Aus dem IETF-Internet-Draft "OSPF Optimized Multipath (OSPF-OMP)" von C. Villamizar, datiert vom Februar 1999, ist ein Verfahren zur Datenverkehrsverteilung bekannt, bei dem zur Abstimmung der Netzknoten Lastinformationen von allen Netzknoten über das Kommunikationsnetz verteilt werden. Dabei verarbeitet jeder Netzknoten die von den anderen Netzknoten empfangenen Lastinformationen, um daraus neue Lastinformationen zu ermitteln, die wiederum im Netzwerk verteilt werden. In der Regel konvergiert das Abstimmungsverfahren nach einiger Zeit zu einem Zustand, bei dem die in jedem Netzknoten vorliegenden Lastinformationen miteinander konsistent sind. Dies erlaubt dann jedem Netzknoten jeweils eine autonome Entscheidung über eine netzknotenspezifische Lastaufteilung zu treffen, die auf das Gesamtnetz bezogen optimiert ist. Bevor eine solche optimierte Lastaufteilung vorgenommen werden kann, ist jedoch erst die Konvergenz des verhältnismäßig zeitaufwändigen Abstimmungsverfahrens zwischen allen Netzknoten abzuwarten. Darüber hinaus bedingt jede Änderung der Netzwerktopologie, z.B. infolge eines Ausfalls einer Linkleitung, einen neuerlichen Konvergenzprozess.

In dem IETF-Internet-Draft (IETF: internet engineering task force) "draft-hummel-te-oct-00.txt" von Heinrich Hummel, datiert vom Oktober 1999, wird vorgeschlagen, zum Verteilen der Datenverkehrslast eine zentrale Datenverkehr-Lenkungseinrichtung einzusetzen. Aufgrund der zentralen Lenkung ist zur optimalen Verteilung des Datenverkehrs ein Abstimmen aller Netzknoten untereinander nicht erforderlich. Die Datenverkehr-Lenkungseinrichtung übermittelt zu jedem Netzknoten Wahrscheinlichkeitsangaben, die für jeden Zielnetzknoten angeben, mit welcher Wahrscheinlichkeit ein jeweiliger zu diesem Zielnetzknoten führender Leitweg für eine nachfolgend aufzubauende Verbindung zu wählen ist. Bei einem nachfolgenden Verbindungsaufbau wird der konkret zu nutzende Leitweg dann mit Hilfe eines Zufallsgenerators gemäß den übermittelten Wahrscheinlichkeitsangaben ausgewählt. Eine feste Zuordnung von Verbindungen zu Leitwegen erweist sich jedoch insbesondere bei permanenten Verbindungen mit stark schwankenden Datenübertragungsraten als unflexibel. Darüber hinaus erfordert eine ständige Zuordnung von Verbindungen zu Leitwegen bei häufigem Auf- und Abbau von Verbindungen einen hohen Verwaltungsaufwand für einen jeweiligen Netzknoten. Dies ist insbesondere bei großen, eine Vielzahl von untergeordneten Kommunikationsnetzen verbindenden Kommunikationsnetzen, wie z.B. großen Service-Provider-Netzen, sehr aufwendig, da sehr viele End-zu-End-Verbindungen zwischen einer potentiell sehr großen Anzahl von Endgeräten zu verwalten wären.

Alternativ dazu könnten Datenpakete ohne Berücksichtigung einer Verbindungszugehörigkeit auf die alternativen Leitwege zum Zielnetzknoten verteilt werden. Dabei ergibt sich jedoch das Problem, daß die unterschiedlich geleiteten Datenpakete beim Zielnetzknoten im allgemeinen nicht in ihrer ursprünglichen Sendereihenfolge ankommen. Eine Rekonstruktion des ursprünglichen verbindungspezifischen Datenpaketstroms wird damit durch das erforderliche Warten auf jedes langsamer übertragene Datenpaket stark verzögert, was insbesondere bei Echtzeitanwendungen oft nicht tolerierbar ist.

Es ist Aufgabe der vorliegenden Erfindung ein Verfahren anzugeben, mit dem die Datenverkehrslast eines Kommunikationsnetzes flexibel und mit geringem Aufwand unter weitgehender Beibehaltung einer verbindungsspezifischen Datenpaketreihenfolge verteilt werden kann. Eine weitere Aufgabe ist es, ein Kommunikationsnetz zur Realisierung des erfindungsgemäßen Verfahrens anzugeben.

Gelöst wird diese Aufgabe durch ein Verfahren mit den Merkmalen des Patentanspruchs 1 und ein Kommunikationsnetz mit den Merkmalen des Patentanspruchs 13.

Zur optimalen netzknotenübergreifenden Verteilung der Datenverkehrslast eines Kommunikationsnetzes werden beim erfindungsgemäßen Verfahren aktuelle Datenübertragungs-Auslastungswerte für Linkleitungen und/oder Netzknoten des Kommunikationsnetzes durch eine Datenverkehr-Überwachungseinrichtung ermittelt. Die Datenübertragungs-Auslastungswerte werden vorzugsweise für alle Linkleitungen und/oder Netzknoten des Kommunikationssystems ermittelt und geben jeweils deren Auslastung, z.B. deren jeweilige noch freie Übertragungsbandbreite, an. Aus den ermittelten Datenübertragungs-Auslastungswerten wird durch die Datenverkehr-Überwachungseinrichtung vorzugsweise für jeden Netzknoten des Kommunikationsnetzes jeweils eine netzknotenindividuelle Verteilungsinformation bestimmt, die zu dem betreffenden Netzknoten übermittelt wird. Eine für einen'individuellen Netzknoten bestimmte Verteilungsinformation gibt für von diesem Netzknoten aus erreichbare Zielnetznoten des Kommunikationsnetzes jeweils an, wie zu diesem Zielnetzknoten zu übertragende Datenpakete auf alternative zu diesem Zielnetzknoten führende Leitwege zu verteilen sind. Die zu den einzelnen Netzknoten übermittelten Verteilungsinformationen sind so aufeinander abgestimmt, daß Übertragungsengpässe im gesamten Kommunikationsnetz weitgehend vermieden werden. Ein Verteilen der Datenverkehrslast hat gegenüber einer gie, bei der Datenströme jeweils über denjenigen Leitweg mit der größten noch freien Übertragungsbandbreite übertragen werden, den Vorteil, daß ein Übertragungsengpaß nicht einfach nur auf einen anderen Leitweg verlagert wird.

Ein eine Verteilungsinformation empfangender Netzknoten bildet abhängig von der Verteilungsinformation eine Einteilungsvorschrift, durch die Adreßinformationen von zu übertragenden Datenpaketen in einzelne Adreßklassen eingeteilt werden. Als der Einteilung zugrunde zu legende Adreßinformation kann z.B. eine Quelladresse des Datenpakets, eine Kombination der Quelladresse mit einer oder mehreren Zieladressen des Datenpakets oder eine eine Zugehörigkeit zu einer Verbindung angebende, im Datenpaket enthaltene Information verwendet werden. Gemäß der Verteilungsinformation können die Adreßinformationen beispielsweise nach Adreßintervallen, nach den Werten einer auf eine Adreßinformation anzuwendenden sog. Hash-Funktion oder nach vorgegebenen Bitkombinationen der Adreßinformation in Adreßklassen eingeteilt werden. Die Adreßklassen sind jeweils einem der alternativen zu einem jeweiligen Zielnetzknoten führenden Leitwege zugeordnet. Zum Übertragen eines Datenpakets wird dessen Adreßinformation extrahiert, die Adreßklasse der extrahierten Adreßinformation bestimmt und das Datenpaket über den der bestimmten Adreßklasse zugeordneten Leitweg übermittelt.

Das Extrahieren der Adreßinformation und Bestimmen der zugehörigen Adreßklasse erfordert seitens des betreffenden Netzknotens nur einen geringen Aufwand. Gleichwohl wird dadurch gewährleistet, daß zur gleichen End-zu-End-Verbindung gehörige Datenpakete, die in der Regel dieselbe Adreßinformation aufweisen, über denselben Leitweg übertragen werden. Auf diese Weise kann eine Änderung der Reihenfolge von Datenpaketen, die derselben End-zu-End-Verbindung zugehören, auf dem Weg zum jeweiligen Zielnetzknoten weitgehend vermieden werden.

Lediglich bei einer Änderung der Einteilungsvorschrift, z.B. aufgrund einer sich ändernden Netzwerkauslastung, kann eine bestehende End-zu-End-Verbindung auf einen anderen Leitweg umgeleitet werden, wodurch die Datenpaketreihenfolge kurzfristig gestört werden kann. Solche kurzfristigen Störungen sind jedoch in der Regel tolerierbar. Bei Verbindungen mit stark variierender Datenrate ist eine Umleitung auf einen neuen Leitweg bei bestehender Verbindung sogar häufig vorteilhaft im Hinblick eine gleichmäßige Auslastung von Netzwerkresourcen.

Eine aufwendige Verwaltung von Zuordnungen aller End-zu-End-Verbindungen zu Leitwegen ist beim erfindungsgemäßen Verfahren nicht erforderlich. Dies ist insbesondere bei großen, eine Vielzahl von untergeordneten Kommunikationsnetzen verbindenden Kommunikationsnetzen sehr vorteilhaft, da in solchen Fällen eine sehr große Anzahl von End-zu-End-Verbindungen zwischen Endgeräten aller untergeordneten Kommunikationsnetze zu verwalten wären.

Darüber hinaus ist die Erfindung weitgehend unabhängig davon, ob die Datenpakete im Kommunikationsnetz verbindungorientiert oder verbindungslos übermittelt werden. Dies stellt insbesondere bei Kommunikationsnetzen mit unterschiedlichen Hierarchiestufen oder heterogenen Kommunikationsnetzen, die Datenpakete häufig streckenweise verbindungsorientiert und streckenweise verbindungslos übermitteln, einen erheblichen Vorteil dar.

Vorteilhafte Ausführungsformen der Erfindung sind in den abhängigen Ansprüchen angegeben.

Nach einer vorteilhaften Ausführungsform der Erfindung können die Datenübertragungs-Auslastungswerte mit Hilfe eines Routingprotokolls des Kommunikationsnetzes, wie z.B. dem Routingprotokoll PNNI (private network to network interface) oder dem Routingprotokoll OSPF (open shortest path first), vorzugsweise in regelmäßigen Zeitabständen ermittelt werden.

Mit Hilfe eines Routingprotokolls kann die Datenverkehr-Überwachungseinrichtung auch zur Datenverkehrslenkung erforderliche Strukturinformaticnen, z.B. über den Verlauf aller Leitwege des Kommunikationsnetzes, erhalten.

Ein Datenübertragungs-Auslastungswert kann beispielsweise die noch freie Übertragungsbandbreite einer jeweiligen Linkleitung, den genutzten Anteil von deren gesamter Übertragungsbandbreite oder die aktuelle Bitrate dieser Linkleitung angeben. Weiterhin können die Datenübertragungs-Auslastungswerte auch verbindungsspezifisch, übertragungsprioritätsspezifisch, leitwegspezifsich, quellnetzknotenspezifisch und/oder zielnetzknotenspezifisch ermittelt werden. Die Ermittlung solcher spezifischen Datenübertragungs-Auslastungswerte erlaubt eine sehr differenzierte Verteilung der Datenverkehrslast.

Zur Ermittlung der Datenübertragungs-Auslastungswerte können auch von einem oder mehreren, vorzugsweise aber von allen, Netzknoten des Kommunikationsnetzes linkleitungsspezifische, leitwegspezifische, verbindungsspezifische und/oder übertragungsprioritätsspezifische Auslastungsinformationen für die von dem jeweiligen Netzknoten ausgehenden Linkleitungen, Leitwege und/oder Verbindungen zur Datenverkehr-Überwachungseinrichtung übermittelt werden.

Aus den oben angegebenen, spezifisch ermittelten Datenübertragungs-Auslastungswerten können durch die Datenverkehr-Überwachungseinrichtung entsprechend verbindungsspezifische, übertragungsprioritätsspezifische, leitwegspezifische, quellnetzknotenspezifische und/oder zielnetzknotenspezifische Verteilungsinformationen, vorzugsweise für alle Netzknoten des Kommunikationsnetzes ermittelt werden.

Gemäß einer vorteilhaften Ausführungsform der Erfindung können zum Bestimmen der Verteilungsinformationen vorher ermittelte Datenübertragungs-Auslastungswerte und/oder vorher ermittelte Verteilungsinformationen zeitlich extrapoliert werden. Durch die zeitliche Extrapolation können die Verteilungsinformationen an die zu einem späteren Zeitpunkt zu erwartende Verkehrslast optimal angepaßt werden.

Die extrapolierten Datenübertragungs-Auslastungswerte bzw. Verteilungsinformationen können später mit tatsächlichen, zum extrapolierten Zeitpunkt ermittelten Werten verglichen werden. Abhängig von der erzielten Übereinstimmung kann eine nachfolgende Extrapolation modifiziert oder unterlassen werden oder nachfolgend extrapolierte Werte entsprechend stärker oder schwächer gewichtet werden.

Nach einer weiteren vorteilhaften Ausführungsform der Erfindung kann eine für einen Netzknoten spezifische Verteilungsinformation Anteilsangaben umfassen, die für jeden der alternativen zu einem Zielnetzknoten führenden Leitwege angeben, welcher Anteil der zu diesem Zielnetzknoten zu übertragenden Datenpakete über den jeweiligen Leitweg zu übertragen ist. Dabei kann eine der Anteilsangaben dazu vorgesehen sein anzugeben, welcher Anteil der Datenpakete, z.B. in einer Überlastsituation, zu verwerfen ist.

Mit den Anteilsangaben kann weiterhin ein Zufallsgenerator gewichtet werden, mit dessen Hilfe Datenpakete einem der Leitwege zum Übertragen zugeteilt werden.

Ein Ausführungsbeispiel der Erfindung wird nachfolgend anhand der Zeichnung näher erläutert.

Es zeigen jeweils in schematischer Darstellung
Fig 1 ein zwei untergeordnete Kommunikationsnetze verbindendes Kommunikationsnetz mit mehreren alternativen, von einem Eintritts-Netzknoten zu einem Austritts-Netzknoten führenden Leitwegen,
Fig 2 dasselbe Kommunikationsnetz beim Übermitteln von Datenübertragungs-Auslastungswerten und Verteilungsinformationen,
Fig 3 ein Blockschaltbild eines als Datenverkehr-Überwachungseinrichtung fungierenden, zentralen Netzknotens des Kommunikationsnetzes und
Fig 4 ein Blockschaltbild des Eintritts-Netzknotens.

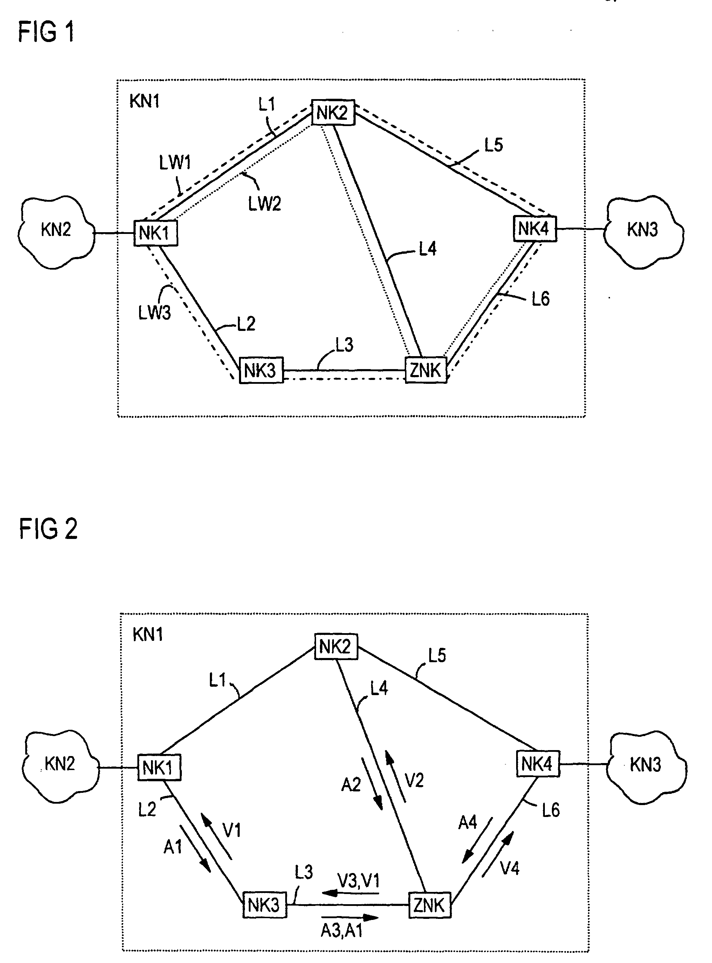

In **Fig 1** ist ein Kommunikationsnetz KN1 schematisch dargestellt, über das zwei untergeordnete Kommunikationsnetze KN2 und KN3 gekoppelt sind. Das Kommunikationsnetz KN1 weist einen an das Kommunikationsnetz KN2 angeschlossenen Eintritts-Netzknoten NK1, einen an das Kommunikationsnetz KN3 angeschlossenen Austritts-Netzknoten NK4, einen als Datenverkehr-Überwachungseinrichtung fungierenden, zentralen Netzknoten ZNK sowie weitere Netzknoten NK2 und NK3 auf. Die Netzknoten NK1,...,NK4,ZNK des Kommunikationsnetzes KN1 sind über Linkleitungen L1,...,L6 vernetzt. Dabei verbindet die Linkleitung L1 die Netzknoten NK1 und NK2, die Linkleitung L2 die Netzknoten NK1 und NK3, die Linkleitung L3 die Netzknoten NK3 und ZNK, die Linkleitung L4 die Netzknoten ZNK und NK2, die Linkleitung L5 die Netzknoten NK4 und NK2, und die Linkleitung L6 die Netzknoten NK4 und ZNK.

Jeder Netzknoten NK1,...,NK4,ZNK kann Datenpakete zu jedem anderen der Netzknoten NK1,...,NK4, ZNK jeweils über mehrere alternative Leitwege übermitteln. Der Übersichtlichkeit halber sind in Fig 1 nur die vom Eintritts-Netzknoten NK1 zum Austritts-Netzknoten NK4 führenden Leitwege LW1, LW2 und LW3 beispielhaft dargestellt. Leitweg LW1 führt dabei über die Linkleitungen L1 und L5, Leitweg LW2 über die Linkleitungen L1, L4 und L6 und Leitweg LW3 über die Linkleitungen L2, L3 und L6.

Für das vorliegende Ausführungsbeispiel sei angenommen, daß die Datenübermittlung in den Kommunikationsnetzen KN2 und KN3 auf dem Internet-Protokoll (IP) und im Kommunikationsnetz KN1 auf dem sog. MPLS-Protokoll (multiprotocol label switching) basiert. Nach einer alternativen Ausführungsform kann das Kommunikationsnetz KN1 z.B. auch als sog. ATM-Netz (asynchronous transfer mode) realisiert sein.

Zur Übermittlung von Datenpaketen über die Leitwege LW1, LW2 und LW3 kann im Rahmen des MPLS-Protokolls jeweils eine Verbindung entlang dieser Leitwege, z.B. mittels einer sog. Setup-Meldung, aufgebaut werden. Diese Verbindungen, die häufig auch als LSP (label switched path) bezeichnet werden, können für jeden Leitweg entweder vorab oder erst bei Bedarf erstellt werden. Die über einen solchen LSP zu übertragenden Datenpakete werden gemäß MPLS-Protokoll jeweils mit einem sog. "Label" versehen, das einen zu benutzenden Leitweg spezifiziert.

Im folgenden werden ohne Einschränkung der Allgemeinheit Datenübertragungen von Ursprungs-Endgeräten (nicht dargestellt) des Kommunikationsnetzes KN2 über das Kommunikationsnetz KN1 zu Ziel-Endgeräten (nicht dargestellt) des Kommunikationsnetzes KN3 im Rahmen von End-zu-End-Verbindungen zwischen den Ursprungs- und den Ziel-Endgeräten betrachtet. In den Kommunikationsnetzen KN2 und KN3 werden die in diesem Rahmen zu übertragenden Daten innerhalb von IP-Datenpaketen transportiert. Die IP-Datenpakete beinhalten jeweils eine mindestens ein Ziel-Endgerät identifizierende Ziel-IP-Adresse und eine das jeweilige Ursprungs-Endgerät identifizierende Quell-IP-Adresse. Weiterhin weisen die einzelnen End-zu-End-Verbindungen unterschiedliche Übertragungsprioritäten auf.

Die im Rahmen der End-zu-End-Verbindungen zu übertragenden IP-Datenpakete werden vom Kommunikationsnetz KN2 zum Eintritts-Netzknoten NK1 übertragen. Dieser bestimmt anhand der in den IP-Datenpaketen enthaltenen Ziel-IP-Adressen einen jeweiligen Austritts-Netzknoten, hier NK4, zum Kommunikationsnetz, hier KN3, eines jeweiligen Ziel-Endgerätes. Außerdem wird die Übertragungspriorität einer jeweiligen End-zu-End-Verbindung ermittelt. Der Eintritts-Netzknoten NK1 hat die IP-Datenpakete nun dergestalt auf die alternativen, zum Austritts-Netzknoten NK4 führenden Leitwege LW1, LW2 und LW3 zu verteilen, daß Übertragungsengpässe im Kommunikationsnetz KN1 weitgehend vermieden und dessen Übertragungsresourcen möglichst optimal genutzt werden. Für den Fall, daß an die Kommunikationsnetze KN2 oder KN3 eine große Anzahl von Endgeräten angekoppelt ist, können auf jeden dieser Leitwege bzw. LSPs sehr viele End-zu-End-Verbindungen entfallen.

Die Bereitstellung der zur Verteilung der Datenpakete erforderlichen Informationen wird durch **Fig 2** verdeutlicht. Fig 2 zeigt das Kommunikationsnetz KN1 beim Übertragen von Auslastungsinformationen A1,...,A4 und Verteilungsinformationen V1,...,V4.

Die Auslastungsinformationen A1,...,A4 geben eine aktuelle Auslastungssituation des Kommunikationsnetzes wider und werden in regelmäßigen Zeitabständen von den Netzknoten NK1,...,NK4 jeweils zum zentralen Netzknoten ZNK übermittelt. Ein jeweiliger Netzknoten NK1,...,NK4 ermittelt dazu in regelmäßigen Zeitabständen für jede von ihm ausgehende Linkleitung die auf dieser Linkleitung aktuell belegte Übertragungsbandbreite. Alternativ dazu können linkleitungsspezifische Bandbreitenbelegungen auch separat für alle Übertragungsprioritäten und/oder Leitwege bestimmt werden. Die von einem Netzknoten NK1,...,NK4 ermittelten Übertragungsbandbreiten werden zu einer Auslastungsinformation A1,...,A4 zusammengefaßt und so zum zentralen Netzknoten ZNK übermittelt.

Aus den übermittelten Auslastungsinformationen A1,...,A4 bestimmt der zentrale Netzknoten ZNK anschließend für jeden der Netzknoten NK1,...,NK4 eine netzknotenspezifische Verteilungsinformation V1,...,V4 und übermittelt diese jeweils zum betreffenden Netzknoten. Eine Verteilungsinformation V1,...,V4 für einen Netzknoten NK1,...,NK4 umfaßt für jeden von diesem Netzknoten aus erreichbaren Zielnetzknoten des Kommunikationsnetzes KN1 Anteilsangaben, die für jeden zu diesem Zielnetzknoten führenden Leitweg angeben, welcher Anteil der für diesen Zielnetzknoten bestimmten Datenpakete über diesen Leitweg zu übertragen ist. Zusätzlich kann in einer Verteilungsinformation auch eine Anteilsangabe enthalten sein, die angibt welcher Anteil der zu einem jeweiligen Zielnetzknoten zu übertragenden Datenpakete, z.B. bei einer Überlastsituation, zu verwerfen ist. Diese Anteilsangabe wird im folgenden auch als Verwerfungsanteil bezeichnet.

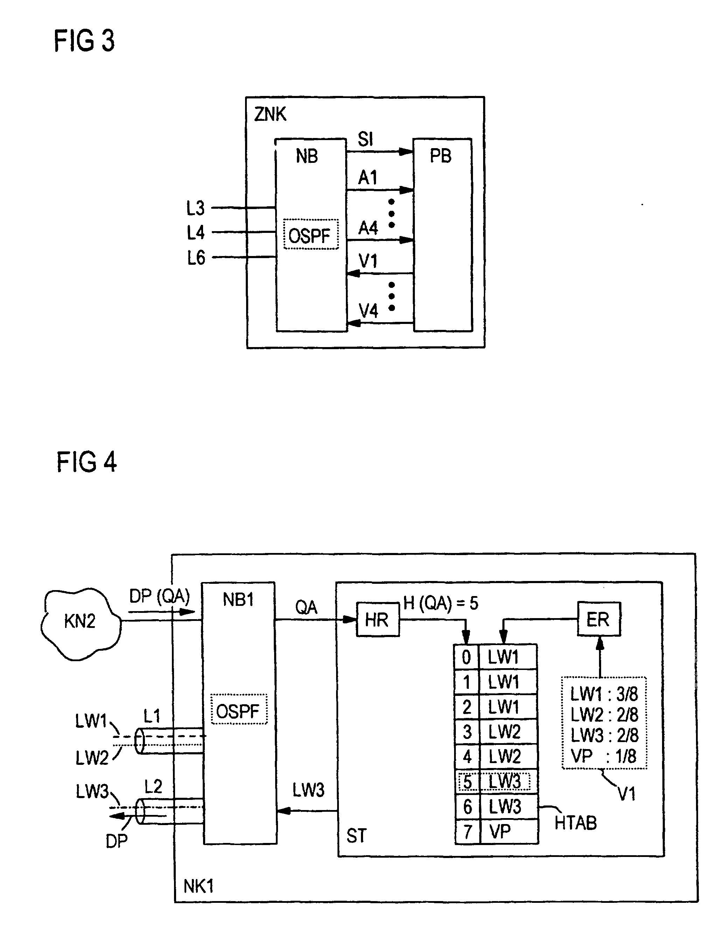

**Fig 3** zeigt ein Blockschaltbild des zentralen Netzknotens ZNK. Als Funktionskomponenten sind eine an die Linkleitungen L3, L4 und L6 angeschlossene Netzwerk-Baugruppe NB und eine daran angekoppelte Prozessorbaugruppe PB dargestellt. In der Netzwerk-Baugruppe NB ist das sog. OSPF-Routingprotokoll (o-pen shortest path first) implementiert. Nach einer alternativen Ausgestaltung kann als Routingprotokoll auch das sog. PNNI-Protokoll (private network to network interface) verwendet werden.

Mit Hilfe des Routingprotokolls OSPF extrahiert der zentrale Netzknoten ZNK Strukturinformationen SI aus dem Kommunikationsnetz KN1, die dessen gesamte Datenübermittlungsstruktur beschreiben. Die Strukturinformationen SI beschreiben insbesondere alle von einem beliebigen ersten Netzknoten NK1,...,NK4,ZNK zu einem beliebigen zweiten Netzknoten NK1,...,NK4,ZNK verlaufenden Leitwege und die maximale Übertragungsbandbreite einer jeden Linkleitung L1,...,L6 des Kommunikationsnetzes KN1. Gegebenenfalls können diese Informationen auch jeweils übertragungsprioritätsspezifisch erfaßt werden. Die erfaßten Strukturinformationen SI werden von der Netzwerk-Baugruppe NB zur Prozessorbaugruppe PB übermittelt.

Weiterhin leitet die Netzwerk-Baugruppe NB auch die in regelmäßigen Zeitabständen empfangenen Auslastungsinformationen A1,...,A4 zur Prozessor-Baugruppe PB weiter. Diese rechnet die in den Auslastungsinformationen A1,...,A4 enthaltenen Bandbreitenbelegungen zunächst anhand der in den Strukturinformationen SI enthaltenen maximalen Übertragungsbandbreiten in Datenübertragungs-Auslastungswerte um, die die insgesamt noch freie Übertragungskapazität für jede Linkleitung L1,...,L6, gegebenenfalls übertragungsprioritätsspezifisch, angeben.

Die so bestimmten Datenübertragungs-Auslastungswerte werden mit Hilfe von vorher bestimmten Datenübertragungs-Auslastungswerten zeitlich extrapoliert, um Schätzwerte für die Auslastungssituation zu einem zukünftigen Zeitpunkt zu erhalten. Dies erlaubt eine zeitlich vorausschauende und damit sehr effiziente Steuerung des Datenverkehrs.

Aus der Gesamtheit der Datenübertragungs-Auslastungswerte berechnet die Prozessorbaugruppe PB anschließend die Verteilungsinformationen V1,...,V4, jeweils individuell für jeden Netzknoten NK1,...,NK4. Auch für den zentralen Netzknoten ZNK selbst wird so eine Verteilungsinformation (nicht dargestellt) ermittelt. Die ermittelten Verteilungsinformationen V1,...,V4 werden von der Prozessorbaugruppe PB zur Netzwerkbaugruppe NB übermittelt und von dieser in regelmäßigen Zeitabständen zu dem jeweils bestimmungsgemäßen Netzknoten NK1,...,NK4 übertragen.

Die Verteilungsinformationen V1,...,V4 werden so bestimmt, daß die gemäß den Verteilungsinformationen aufgeteilten Datenströme aller Netzknoten NK1,...,NK4,ZNK sich in ihrer Gesamtheit so auf die einzelnen Linkleitungen L1,...,L6 verteilen, daß die dort noch freien Übertragungsbandbreiten optimal genutzt werden und Übertragungsengpässe vermieden werden.

Übersteigt die Gesamtheit der Datenströme auf einer der Linkleitungen L1,...,L6 deren maximale Übertragungskapazität wird den davon betroffenen Netzknoten jeweils eine Verteilungsinformation mit einem netzknotenindividuellen Verwerfungsanteil übermittelt. Der zu einem dieser Netzknoten übermittelte Verwerfungsanteil ist in der Regel jeweils proportional zu dem Bandbreitenanteil den dieser Netzknoten bei der überlasteten Linkleitung belegt. Die Verwerfungsanteile werden so bemessen, daß die verbleibenden Datenströme die maximale Übertragungsbandbreite der Linkleitungen L1,...,L6 nicht überschreiten. Die Verwerfungsanteile können auch übertragungsprioritätsspezifisch bestimmt werden. In diesem Fall werden für Datenströme niedrigerer Priorität höhere Verwerfungsanteile festgelegt als für Datenströme höherer Übertragungspriorität.

Bei besonderen einen Netzknoten NK1,...,NK4 betreffenden Übertragungssituationen, z.B. bei Ausfall einer Linkleitung oder eines weiterführenden Netzknotens, können durch die Prozessorbaugruppe PB auch ein oder mehrere neue Leitwege für diesen Netzknoten bestimmt werden. In diesem Fall wird eine die neuen Leitwege beschreibende Leitweginformation zu diesem Netzknoten übermittelt.

**Fig 4** zeigt ein Blockschaltbild des Eintritts-Netzknotens NK1 in detaillierterer Darstellung. Als dessen Funktionskomponenten sind eine Netzwerk-Baugruppe NB1, an die das Kommunikationsnetz KN2 und die Linkleitungen L1 und L2 angeschlossen sind, sowie eine an die Netzwerk-Baugruppe NB1 gekoppelte Steuereinrichtung ST dargestellt. Wie schon aus Fig 1 ersichtlich ist, führen über die Linkleitung L1 die Leitwege LW1 und LW2 und über die Linkleitung L2 der Leitweg LW3. In der Netzwerk-Baugruppe NB1 ist das OSPF-Routingprotokoll implementiert. Nach einer alternativen Ausgestaltung kann als Routingprotokoll auch das PNNI-Protokoll verwendet werden.

In der Steuereinrichtung ST ist die dem Netzknoten NK1 zuletzt übermittelte Verteilungsinformation V1 gespeichert. Diese umfaßt Anteilsangaben, die für jeden zum Austritts-Netzknoten NK4 führenden Leitweg LW1, LW2 bzw. LW3 jeweils den Anteil der über diesen Leitweg zu übertragenen Datenpakete angibt. Ferner ist in der Verteilungsinformation V1 ein Verwerfungsanteil enthalten, der angibt welcher Anteil der Datenpakete einem Verwerfungspfad VP zuzuweisen ist, d.h. welcher Anteil der Datenpakete zu verwerfen ist. Für das vorliegende Ausführungsbeispiel sei angenommen, daß durch die Anteilsangaben 3/8 der Datenpakete dem Leitweg LW1, 2/8 der Datenpakete jeweils den Leitwegen LW2 und LW3 und 1/8 der Datenpakete dem Verwerfungspfad VP zugewiesen werden.

Die Verteilung von aus dem Kommunikationsnetz KN2 stammenden und zum Austritts-Netzknoten NK4 zu übertragenden IP-Datenpaketen wird im folgenden anhand der Übertragung eines einzelnen IP-Datenpakets DP erläutert.

Bei Eintreffen eines aus dem Kommunikationsnetz KN2 stammenden IP-Datenpaketes DP wird durch die Netzwerkbaugruppe NB1 zunächst dessen Ziel-IP-Adresse geprüft, um so einen jeweiligen Austritts-Netzknoten, hier NK4, zu bestimmen. Weiterhin wird durch die Netzwerkbaugruppe NB1 die Quell-IP-Adresse QA des Datenpakets DP extrahiert und zur Steuereinrichtung ST übertragen.

In der Steuereinrichtung ST sind eine Einteilungsroutine ER und eine sog. Hash-Routine HR implementiert, die beide auf eine in der Steuereinrichtung ST gespeicherte sog. Hash-Tabelle HTAB zugreifen können. Durch die Einteilungsroutine ER wird aus den in der Verteilungsinformation V1 enthaltenen Anteilsangaben eine diesen Anteilsangaben entsprechende Zuordnung von Adreßklassen 0,...,7 zu den Leitwegen LW1,LW2,LW3 und dem Verwerfungspfad VP erzeugt. Die Zuordnung wird in der Hash-Tabelle HTAB gespeichert. Im vorliegenden Ausführungsbeispiel sind dem Leitweg LW1 die Adreßklassen 0, 1 und 2, dem Leitweg LW2 die Adreßklassen 3 und 4, dem Leitweg LW3 die Adreßklassen 5 und 6 und dem Verwerfungspfad VP die Adreßklasse 7 zugeordnet.

Mittels der Hash-Routine HR kann aus einer Adreßinformation, wie z.B. der Quell-IP-Adresse QA ein sog. Hash-Wert gebildet werden, der eine Einteilung der Adreßinformation in Adreßklassen erlaubt. Zum Bilden eines Hash-Wertes aus einer Adreßinformation können einzelne Bits der Adreßinformation untereinander oder mit anderen konstanten Bitmustern verknüpft werden. Dies hat den Zweck, daß die Hash-Werte von unterschiedlichen Adreßinformationen statistisch möglichst gleichverteilt werden, um eine möglichst gleichmäßige Verteilung der Adreßinformationen auf die Adreßklassen zu erreichen. Im vorliegenden Fall bildet die Hash-Routine HR beliebige Adreßinformationen jeweils auf Hash-Werte im Bereich von 0 bis 7 ab, die ihrerseits die einzelnen Adreßklassen 0,...,7 repräsentieren. Durch die annähernd gleichmäßige Verteilung von Adreßinformationen auf Adreßklassen führt die anteilige Zuordnung von Adreßklassen 0,...,7 zu Leitwegen zu einer der Verteilungsinformation V1 gemäßen Zuordnung von zu übertragenden Datenpaketen zu Leitwegen.

Die Quell-IP-Adresse QA des IP-Datenpakets DP wird durch die Hash-Routine HR im vorliegenden Ausführungsbeispiel auf den Hash-Wert 5 abgebildet und somit der Adreßklasse 5 zugeordnet. Anhand der Hash-Tabelle HTAB ermittelt die Steuereinrichtung ST anschließend den Leitweg LW3 als den der Adreßklasse 5 zugeordneten Leitweg und übermittelt daraufhin eine diesen Leitweg identifizierende Information zur Netzwerkbaugruppe NB1. Diese versieht das zu übertragende IP-Datenpaket DP gemäß dem MPLS-Protokoll mit einem "Label" das den Leitweg LW3 spezifiziert und übermittelt das IP-Datenpaket DP, eingebettet in ein MPLS-Datenpaket über die Linkleitung L2 in das Kommunikationsnetz KN1. Dieses überträgt das MPLS-Datenpaket über den durch das "Label" spezifizierten Leitweg LW3 zum Austritts-Netzknoten NK4, der das IP-Datenpaket DP aus dem MPLS-Datenpaket extrahiert und in das Kommunikationsnetz KN3 übermittelt.

## Patentansprüche

1. Verfahren zum Verteilen einer Datenverkehrslast eines Kommunikationsnetzes (KN1) mit einer Vielzahl von über Linkleitungen (L1,...,L6) vernetzten Netzknoten (NK1,... , NK4, ZNK) , bei dem
a) eine zentrale Datenverkehr-Überwachungseinrichtung (ZNK) für eine jeweilige Linkleitung (L1,...,L6) und/oder einen jeweiligen Netzknoten (NK1,...,NK4,ZNK) einen aktuellen Datenübertragungs-Auslastungswert (A1,...,A4) ermittelt,
b) die zentrale Datenverkehr-Überwachungseinrichtung (ZNK) abhängig von ermittelten Datenübertragungs-Auslastungswerten (A1,...,A4) eine netzknotenspezifische Verteilungsinformation (V1,...,V4) für einen jeweiligen Netzknoten (NK1,...,NK4) ermittelt und zu diesem übermittelt, wobei die Verteilungsinformation angibt, wie zu einem jeweiligen Zielnetzknoten (NK4) zu übertragende Datenpakete (DP) auf alternative zu diesem Zielnetzknoten führende Leitwege (LW1, LW2, LW3) zu verteilen sind,
c) dieser Netzknoten (NK1,...,NK4) abhängig von der übermittelten Verteilungsinformation (V1,...,V4) eine Einteilungsvorschrift bildet, durch die Adreßinformationen (QA) von Datenpaketen (DP) in einzelne Adreßklassen (0,...,7) eingeteilt werden, die jeweils einem von mehreren alternativen zu einem jeweiligen Zielnetzknoten (NK4) führenden Leitwegen (LW1,LW2,LW3) zugeordnet werden, und
d) dieser Netzknoten (NK1,...,NK4) bei Eintreffen eines zu diesem Zielnetzknoten (NK4) zu übertragenden Datenpakets (DP) die Adreßklasse (0,...,7) von dessen Adreßinformation (QA) ermittelt und das Datenpaket (DP) über den der ermittelten Adreßklasse (0,...,7) zugeordneten Leitweg (LW1, LW2, LW3) überträgt.

2. Verfahren nach Anspruch 1,
**dadurch gekennzeichnet,**
**daß** die Datenübertragungs-Auslastungswerte (A1,...,A4) mit Hilfe eines Routingprotokolls (OSPF) des Kommunikationsnetzes (KN1) ermittelt werden.

3. Verfahren nach Anspruch 1 oder 2,
**dadurch gekennzeichnet,**
**daß** zur Ermittlung der Datenübertragungs-Auslastungswerte (A1,...,A4) von wenigstens einem Netzknoten (NK1,...,NK4) linkleitungsspezifische und/oder leitwegspezifische und/oder verbindungsspezifische Auslastungsinformationen (A1,...,A4), die von diesem Netzknoten (NK1,...,NK4) ausgehende Linkleitungen (L1,...,L6) und/oder Leitwege (LW1,LW2,LW3) und/oder Verbindungen betreffen, zur Datenverkehr-Überwachungseinrichtung (ZNK) übermittelt werden.

4. Verfahren nach einem der vorhergehenden Ansprüche,
**dadurch gekennzeichnet,**
**daß** die zu übertragenden Datenpakete (DP) unterschiedliche Übertragungsprioritäten aufweisen, und
**daß** zur Ermittlung der Datenübertragungs-Auslastungswerte (A1,...,A4) von wenigstens einem Netzknoten (NK1,...,NK4) übertragungsprioritätsspezifische Auslastungsinformationen (A1,...,A4) zur Datenverkehr-Überwachungseinrichtung (ZNK) übermittelt werden.

5. Verfahren nach Anspruch 4,
**dadurch gekennzeichnet,**
**daß** durch die Datenverkehr-Überwachungseinrichtung (ZNK) übertragungsprioritätsspezifische Verteilungsinformationen (V1,...V4) ermittelt und zu einem jeweiligen Netzknoten (NK1,...,NK4) übermittelt werden, der Datenpakete (DP) einer jeweiligen Übertragungspriorität gemäß einer für diese Übertragungspriorität bestimmten Verteilungsinformation (V1,...,V4) verteilt.

6. Verfahren nach einem der vorhergehenden Ansprüche,
**dadurch gekennzeichnet,**
**daß** für einen jeweiligen Netzknoten (NK1,...,NK4) eine zielnetzknotenspezifische Verteilungsinformation (V1,...,V4) ermittelt und zu diesem Netzknoten (NK1,...,NK4) übermittelt wird.

7. Verfahren nach einem der vorhergehenden Ansprüche,
**dadurch gekennzeichnet,**
**daß** zum Bestimmen einer Verteilungsinformation (V1,...,V4) vorher ermittelte Datenübertragungs-Auslastungswerte (A1,...,A4) und/oder vorher ermittelte Verteilungsinformationen (V1,...,V4) zeitlich extrapoliert werden.

8. Verfahren nach einem der vorhergehenden Ansprüche,
**dadurch gekennzeichnet,**
**daß** eine Verteilungsinformation (V1,...,V4) für einen Netzknoten (NK1,...,NK4) Anteilsangaben umfaßt, die für jeden Leitweg aus einer Gruppe von alternativen von diesem Netzknoten zu einem Zielnetzknoten (NK4) führenden Leitwegen (LW1,LW2,LW3) angeben, welcher Anteil der zu diesem Zielnetzknoten (NK4) zu übertragenden Datenpakete (DP) über den jeweiligen Leitweg (LW1,LW2,LW3) zu übertragen ist.

9. Verfahren nach Anspruch 8,
**dadurch gekennzeichnet,**
**daß** der Netzknoten (NK1,...,NK4) ein zum Zielnetzknoten (NK4) zu übertragendes Datenpaket (DP) mit Hilfe eines gemäß den Anteilsangaben gewichteten Zufallsgenerators einem der alternativen Leitwege (LW1,LW2,LW3) zum Übertragen zuteilt.

10. Verfahren nach einem der vorhergehenden Ansprüche,
**dadurch gekennzeichnet,**
**daß** die Adreßinformation (QA) eine den Sender eines jeweiligen Datenpakets (DP) identifizierende Quelladreßinformation umfaßt.

11. Verfahren nach einem der vorhergehenden Ansprüche,
**dadurch gekennzeichnet,**
**daß** die Adreßklasseneinteilung abhängig von gespeicherten Adreßinformationen früher übertragener Datenpakete erfolgt.

12. Verfahren nach einem der vorhergehenden Ansprüche,
**dadurch gekennzeichnet,**
**daß** durch die Datenverkehr-Überwachungseinrichtung (ZNK) abhängig von ermittelten Datenübertragungs-Auslastungswerten (A1,...,A4) ein neuer, alternativer Leitweg für einen Netzknoten (NK1,...,NK4) bestimmt wird und eine den neuen Leitweg beschreibende Leitweginformation zu diesem Netzknoten (NK1,...,NK4) übermittelt wird.

13. Kommunikationsnetz (KN1) mit einer Vielzahl von über Linkleitungen (L1,...,L6) vernetzten Netzknoten (NK1,...,NK4, ZNK) und mit
a) einer zentralen Datenverkehr-Überwachungseinrichtung (ZNK), die
- Erfassungsmittel (NB, PB) zum Ermitteln eines aktuellen Datenübertragungs-Auslastungswertes (A1,...,A4) für eine jeweilige Linkleitung (L1,...,L6) und/oder einen jeweiligen Netzknoten (NK1,...,NK4, ZNK),
- Auswertemittel (PB) zum Bestimmen einer netzknotenspezifischen Verteilungsinformation (V1,...,V4) für einen jeweiligen Netzknoten (NK1,...,NK4) abhängig von ermittelten Datenübertragungs-Auslastungswerten (A1,...,A4), wobei die Verteilungsinformation angibt, wie zu einem jeweiligen Zielnetzknoten (NK4) zu übertragende Datenpakete (DP) auf alternative zu diesem Zielnetzknoten führende Leitwege (LW1, Lw2, LW3) zu verteilen sind, sowie
- Übertragungsmittel (NB) zum Übermitteln der Verteilungsinformation (V1,...,V4) an den jeweiligen Netzknoten (NK1,...,NK4) aufweist, und mit
b) Netzknoten (NK1,...,NK4), die
- Einteilungsmittel (TG) zum Bilden einer Einteilungsvorschrift abhängig von einer übermittelten Verteilungsinformation (V1,...,V4) für eine Einteilung von Adreßinformationen (QA) von Datenpaketen (DP) in einzelne Adreßklassen (0,...,7), die jeweils einem von mehreren alternativen zu einem jeweiligen Zielnetzknoten (NK4) führenden Leitwegen (LW1,LW2,LW3) zugeordnet sind, sowie
- Datenpaket-Verteilungsmittel (HR, NB1) zum Ermitteln der Adreßklasse (0,...,7) der Adreßinformation (QA) eines zu übertragenden Datenpakets (DP) und zum Übertragen des Datenpakets (DP) über den dieser Adreßklasse (0,...,7) zugeordneten Leitweg (LW1,LW2,LW3) aufweisen.

## Claims

1. Method for distributing a data-traffic load on a communication network (KN1) with an extensive range of network nodes (NK1..NK4, ZNK) connected via link lines (L1..L6), where
a) a central data-traffic-monitoring system (ZNK) ascertains a current data-transfer-loading value (A1..A4) for a respective link line (L1..L6) and/or a respective network node (NK1..NK4, ZNK),
b) based on the data-transfer-loading values (A1..A4) that have been ascertained, the central data-traffic-monitoring system (ZNK) ascertains network-node-specific distribution information (V1..V4) for a respective network node (NK1..NK4) and sends it to the node concerned, the distribution information indicating how data packets (DP) which are to be transferred to a respective destination network node (NK4) can be distributed over alternative routes (LW1, LW2, LW3) leading to this destination network node,
c) based on the distribution information (V1..V4) that has been sent, this network node (NK1..NK4) generates an allocation model, which is used to divide address information (QA) of data packets (DP) into separate address classes (0..7), each of which is assigned to one of a number of alternative routes (LW1, LW2, LW3) leading to a particular destination network node (NK4), and
d) when this network node (NK1..NK4) receives a data packet (DP) addressed to this destination network node (NK4), it ascertains the address class (0..7) from its address information (QA) and sends the data packet (DP) via the route (LW1, LW2, LW3) assigned to the address class (0..7) that has been ascertained.

2. Method according to Claim 1,
**characterized in that**:
the data-transfer-loading values (A1..A4) are ascertained using a routing protocol (OSPF) in the communication network (KN1).

3. Method according to Claim 1 or 2,
**characterized in that**:
at least one network node (NK1..NK4) sends link-line-specific and/or route-specific and/or connection-specific loading information (A1..A4), relating to the outgoing link lines (L1..L6) and/or routes (LW1, LW2, LW3) and/or connections from this network node (NK1..NK4), to the data-traffic-monitoring system (ZNK) to allow data-transfer-loading values (A1..A4) to be ascertained.

4. Method according to one of the above claims,
**characterized in that**:
the data packets (DP) to be transferred have different transfer priorities, and that:
at least one network node (NK1..NK4) sends transfer-priority-specific loading information (A1..A4), to the data-traffic-monitoring system (ZNK) to allow data-transfer-loading values (A1..A4) to be ascertained.

5. Method according to Claim 4,
**characterized in that**:
transfer-priority-specific distribution information (V1..V4) is ascertained by the data-traffic-monitoring system (ZNK) and sent to the respective network node (NK1..NK4), which distributes data packets (DP) of a particular transfer priority in accordance with the distribution information (V1..V4) defined for this transfer priority.

6. Method according to one of the above claims,
**characterized in that**:
destination-network-node-specific distribution information (V1..V4) is determined for a particular network node (NK1..NK4) and sent to that network node (NK1..NK4).

7. Method according to one of the above claims,
**characterized in that**:
in order to determine distribution information (V1..V4), previously ascertained data-transfer-loading values (A1..A4) and/or previously ascertained distribution information (V1..V4) are extrapolated relative to time.

8. Method according to one of the above claims,
**characterized in that**:
the distribution information (V1..V4) for a network node (NK1..NK4) includes quota details that specify, for each route in a group of alternative routes (LW1, LW2, LW3) leading from this node to a destination network node (NK4), what proportion of the data packets (DP) addressed to this destination network node (NK4) should be transferred over the route concerned (LW1, LW2, LW3).

9. Method according to Claim 8,
**characterized in that**:
the network node (NK1..NK4) uses a random-number generator, weighted in accordance with the quota details, to assign a data packet (DP) addressed to the destination network node (NK4) to one of the alternative routes (LW1, LW2, LW3) for onward transfer.

10. Method according to one of the above claims,
**characterized in that**:
the address information (QA) includes source address information that identifies the sender of the data packet (DP) concerned.

11. Method according to one of the above claims,
**characterized in that**:
the allocation of address classes takes place on the basis of stored address information from data packets transmitted previously.

12. Method according to one of the above claims,
**characterized in that**:
based on data-transfer-loading values (A1..A4) that have been ascertained, the data-traffic-monitoring system (ZNK) determines a new, alternative route for a network node (NK1..NK4), and sends route information describing the new route to this network node (NK1..NK4).

13. Communication network (KN1) with an extensive range of network nodes (NK1..NK4, ZNK) connected via link lines (L1..L6), and with
a) a central data-traffic-monitoring system (ZNK), which includes
- an information-capture facility (NB, PB) to ascertain the current data-transfer-loading value (A1..A4) for the link line (L1..L6) and/or network node (NK1..NK4, ZNK) concerned,
- an analysis facility (PB) to determine network-node-specific distribution information (V1..V4) for a particular network node (KN1..KN4), based on the data-transfer-loading values (A1..A4) that have been ascertained, the distribution information indicating how data packets (DP) which are to be transferred to a respective destination network node (NK4) can be distributed over alternative routes (LW1, LW2, LW3) leading to this destination network node, and
- a transmission facility (NB) to send the distribution information (V1..V4) to the relevant network nodes (NK1..NK4), and with
b) network nodes (NK1..NK4), which include
- an allocation facility (TG) that creates an allocation model based on distribution information (V1..V4) that has been sent, and divides address information (QA) of data packets (DP) into separate address classes (0..7), each of which is assigned to one of a number of alternative routes (LW1, LW2, LW3) leading to a particular destination network node (NK4), and
- a data-packet-distribution facility (HR, NB1) that ascertains the address class (0..7) of the address information (QA) of a data packet (DP) to be transferred, and transfers the data packet (DP) via the route (LW1, LW2, LW3) assigned to this address class (0..7).

## Revendications

1. Procédé pour distribuer une charge du trafic des données d'un réseau de communication (KN1) comprenant une pluralité de noeuds de réseau (NK1, ..., NK4, ZNK) mis en réseau par l'intermédiaire de lignes de lien (L1, ..., L6), dans lequel
a) un dispositif central de surveillance du trafic des données (ZNK) détermine une valeur actuelle de l'utilisation de la transmission des données (A1, ..., A4) pour une ligne de lien respective (L1, ..., L6) et/ou un noeud de réseau respectif (NK1, ..., NK4, ZNK),
b) le dispositif central de surveillance du trafic des données (ZNK) détermine, en fonction de valeurs de l'utilisation de la transmission des données (A1, ..., A4) qui ont été déterminées, une information de répartition (V1, ..., V4) spécifique au noeud de réseau pour un noeud de réseau (NK1, ..., NK4) respectif et la transmet à celui-ci, l'information de répartition indiquant la manière dont des paquets de données (DP) à transmettre à un noeud de réseau de destination (NK4) respectif doivent être répartis sur des voies d'acheminement (LW1, LW2, LW3) alternatives conduisant à ce noeud de réseau de destination,
c) ce noeud de réseau (NK1, ..., NK4) constitue, en fonction de l'information de répartition (V1, ..., V4) transmise, une règle de classification par laquelle des informations d'adresse (QA) de paquets de données (DP) sont classées dans des classes d'adresses (0, ..., 7) individuelles qui sont respectivement affectées à l'une de plusieurs voies d'acheminement (LW1, LW2, LW3) alternatives conduisant à un noeud de réseau de destination (NK4) respectif et
d) ce noeud de réseau (NK1, ..., NK4) détermine, à l'arrivée d'un paquet de données (DP) à transmettre à ce noeud de réseau de destination (NK4), la classe d'adresses (0, ..., 7) de son information d'adresse (QA) et transmet le paquet de données (DP) sur la voie d'acheminement (LW1, LW2, LW3) affectée à la classe d'adresses (0, ...,7) qui a été déterminée.

2. Procédé selon la revendication 1, **caractérisé en ce que** les valeurs de l'utilisation de la transmission des données (A1, ..., A4) sont déterminées à l'aide d'un protocole de routage (OSPF) du réseau de communication (KN1).

3. Procédé selon la revendication 1 ou 2, **caractérisé en ce que**, pour déterminer les valeurs de l'utilisation de la transmission des données (A1, ..., A4), des informations (A1, ..., A4) sur l'ampleur de l'utilisation, spécifiques à la ligne de lien et/ou spécifiques à la voie d'acheminement et/ou spécifiques à la connexion, lesquelles concernent des lignes de lien (L1, ..., L6) et/ou des voies d'acheminement (LW1, LW2, LW3) et/ou des connexions partant de ce noeud de réseau (NK1, ..., NK4), sont transmises au dispositif de surveillance du trafic des données (ZNK) par au moins un noeud de réseau (NK1, ..., NK4).

4. Procédé selon l'une des revendications précédentes, **caractérisé en ce que** les paquets de données à transmettre (DP) présentent des priorités de transmission différentes et **en ce que**, pour la détermination des valeurs de l'utilisation de la transmission des données (A1, ..., A4), des informations (A1, ..., A4) sur l'ampleur de l'utilisation spécifiques à la priorité de transmission sont transmises au dispositif de surveillance du trafic des données (ZNK) par au moins un noeud de réseau (NK1, ..., NK4).

5. Procédé selon la revendication 4, **caractérisé en ce que** des informations de répartition spécifiques à la priorité de transmission (V1, ..., V4) sont déterminées par le dispositif de surveillance du trafic des données (ZNK) et transmises à un noeud de réseau (NK1, ..., NK4) respectif qui répartit des paquets de données (DP) d'une priorité de transmission respective conformément à une information de répartition (V1, ..., V4) définie pour cette priorité de transmission.

6. Procédé selon l'une des revendications précédentes, **caractérisé en ce qu'**une information de répartition (V1, ..., V4) spécifique au noeud de réseau de destination est déterminée pour un noeud de réseau (NK1, ..., NK4) respectif et est transmise à ce noeud de réseau (NK1, ..., NK4).

7. Procédé selon l'une des revendications précédentes, **caractérisé en ce que**, pour définir une information de répartition (V1, ..., V4), des valeurs de l'utilisation de la transmission des données (A1, ..., A4) préalablement déterminées et/ou des informations de répartition (V1, ..., V4) préalablement déterminées sont extrapolées dans le temps.

8. Procédé selon l'une des revendications précédentes, **caractérisé en ce qu'**une information de répartition (V1, ..., V4) pour un noeud de réseau (NK1, ..., NK4) comprend des indications de proportions qui renseignent, pour chaque voie d'acheminement, à partir d'un groupe de voies d'acheminement (LW1, LW2, LW3) alternatives allant de ce noeud de réseau à un noeud de réseau de destination (NK4), quelle fraction des paquets de données (DP) à transmettre à ce noeud de réseau de destination (NK4) est à transmettre sur la voie d'acheminement (LW1, LW2, LW3) respective.

9. Procédé selon la revendication 8, **caractérisé en ce que** le noeud de réseau (NK1, ..., NK4), à l'aide d'un générateur aléatoire pondéré selon les indications de proportions, affecte, pour transmission, un paquet de données (DP) à transmettre au noeud de réseau de destination (NK4) à l'une des voies d'acheminement (LW1, LW2, LW3) alternatives.

10. Procédé selon l'une des revendications précédentes, **caractérisé en ce que** l'information d'adresse (QA) comprend une information d'adresse d'origine qui identifie l'émetteur d'un paquet de données (DP) respectif.

11. Procédé selon l'une des revendications précédentes, **caractérisé en ce que** la répartition en classes d'adresses se fait en fonction d'informations d'adresse enregistrées de paquets de données transmis auparavant.

12. Procédé selon l'une des revendications précédentes, **caractérisé en ce que**, en fonction de valeurs de l'utilisation de la transmission des données (A1, ..., A4) qui ont été déterminées, une nouvelle voie d'acheminement alternative est définie pour un noeud de réseau (NK1, ..., NK4) par le dispositif de surveillance du trafic des données (ZNK) et une information sur les voies d'acheminement, laquelle décrit la nouvelle voie d'acheminement, est transmise à ce noeud de réseau (NK1, ..., NK4).

13. Réseau de communication (KN1) comprenant une pluralité de noeuds de réseau (NK1, ..., NK4, ZNK) mis en réseau par l'intermédiaire de lignes de lien (L1, ..., L6) et comprenant
a) un dispositif central de surveillance du trafic des données (ZNK) qui comporte
- des moyens de saisie (NB, PB) pour déterminer une valeur actuelle de l'utilisation de la transmission des données (A1, ..., A4) pour une ligne de lien (L1, ..., L6) respective et/ou un noeud de réseau respectif (NK1, ..., NK4, ZNK),
- des moyens d'évaluation (PB) pour définir une information de répartition (V1, ..., V4) spécifique au noeud de réseau pour un noeud de réseau respectif (NK1, ..., NK4) en fonction de valeurs de l'utilisation de la transmission des données (A1, ..., A4) qui ont été déterminées, l'information de répartition indiquant la manière dont des paquets de données (DP) à transmettre à un noeud de réseau de destination respectif (NK4) doivent être répartis sur des voies d'acheminement (LW1, LW2, LW3) alternatives conduisant à ce noeud de réseau de destination ainsi que
- des moyens de transmission (NB) pour transmettre l'information de répartition (V1, ..., V4) au noeud de réseau (NK1, ..., NK4) respectif et
b) des noeuds de réseau (NK1, ..., NK4) qui comportent
- des moyens de classification (TG) pour constituer une règle de classification en fonction d'une information de répartition (V1, ..., V4) transmise, pour une classification d'informations d'adresse (QA) de paquets de données (DP) en classes d'adresses individuelles (0, ..., 7), lesquelles sont respectivement affectées à l'une de plusieurs voies d'acheminement (LW1, LW2, LW3) alternatives conduisant à un noeud de réseau de destination (NK4) respectif ainsi que
- des moyens de répartition de paquets de données (HR, NB1 ) pour déterminer la classe d'adresses (0, ..., 7) de l'information d'adresse (QA) d'un paquet de données (DP) à transmettre et pour transmettre le paquet de données (DP) sur la voie d'acheminement (LW1, LW2, LW3) affectée à cette classe d'adresses (0, ..., 7).
